# EUROPÄISCHE PATENTSCHRIFT

(11) **EP 3 673 211 B1**
(45) Veröffentlichungstag und Bekanntmachung des Hinweises auf die Patenterteilung: **07.06.2023**
(21) Anmeldenummer: 18746162.9
(22) Anmeldetag: 25.07.2018
(51) Int. Cl.: F24C 15/00, F24C 15/32

(54) **DAMPFGARGERÄT**
STEAM COOKING DEVICE
APPAREIL DE CUISSON À VAPEUR

(30) Priorität: 25.08.2017 DE 102017214932
(43) Veröffentlichungstag der Anmeldung: 01.07.2020
(73) Patentinhaber: BSH Hausgeräte GmbH, 81739 München (DE)
(72) Erfinder: BALL, Ludovic, 67770 Sessenheim (FR); FREY, Sebastian, 75203 Königsbach-Stein (DE); HINTERMAYER, Manfred, 76185 Karlsruhe (DE); NAGEL, Martin, 67580 Forstheim (FR)
(86) Internationale Anmeldenummer: PCT/EP2018/070112
(87) Internationale Veröffentlichungsnummer: WO 2019/038007

(56) Entgegenhaltungen:
- EP-A1- 1 543 754
- EP-A1- 1 724 529
- EP-A1- 2 037 183
- EP-A1- 2 550 902
- CN-U- 202 015 079
- JP-A- 2007 003 112

## Beschreibung

### Hintergrund der Erfindung

Die Erfindung betrifft ein Dampfgargerät mit einer Verdampfereinheit, mit welcher Wasser verdampfbar und der in der Verdampfereinheit erzeugte Dampf in den Garraum des Dampfgargeräts bereitstellbar ist, und einer Wasserversorgungseinheit, die einen entnehmbaren Wassertank mit einer Ventileinheit zur Kopplung mit der Verdampfereinheit aufweist.

### Stand der Technik

Es sind Backöfen bekannt, die auch die Möglichkeit bieten, Gargut durch Dampferzeugung im Garraum zuzubereiten. Dabei werden während der Zubereitung Dampfstöße erzeugt, die in den Garraum geleitet werden bzw. erst darin erzeugt werden. Dazu ist ein Behälter zur Bevorratung von Wasser erforderlich. Dieser kann bei bekannten Geräten im Bereich der Bedienblende des Backofens angeordnet sein und daraus entnommen werden. Dabei kann bei herkömmlichen Ausgestaltungen die Entnahme relativ aufwändig und unhandlich sein. Weiterhin gestaltet sich oftmals die Befüllung des Wassertanks schwierig. Darüber hinaus können die bekannten Wasserversorgungseinheiten einen Nachteil in Hinblick auf eine ungünstige Wärmebilanz aufweisen.

Die EP 2 463 585 A1 offenbart beispielsweise einen Wassertank für ein Dampfgargerät, mit einem Behälter zur Aufnahme des Wassers, wobei an dem Behälter eine frontseitige Abdeckung als Blende angeordnet ist, welche relativ zum Behälter bewegbar angeordnet ist.
Die CN 202 015 079 U beschreibt einen Dampfgarer mit einer Außenhülle, einem Türbauteil und einem in der Außenhülle angeordneten Innenbehälter, wobei an dem Innenbehälter eine Wasserversorgungseinheit mit einem entnehmbaren Wassertank angeordnet ist.

Die EP 2 037 183 A1 offenbart ein Dampfgargerät mit mindestens einem Garraum, mindestens einer Garraumtür, einem Bedienfeld, einem Dampferzeuger zum Verdampfen von Wasser, einem Wassertank zum Aufnehmen von Wasser, das durch den Dampferzeuger verdampft werden soll und einem Wassertank-Aufnahmeschacht zum Aufnehmen des Wassertanks.

Die EP 1 724 529 A1 offenbart einen Ofen, umfassend ein Gehäuse, das einen Garraum definiert, einen Dampferzeuger mit einem Einlass zum Aufnehmen von Wasser, einen Ablauf und einen Dampfauslass, der betriebsmäßig mit dem Garraum verbunden ist, um Dampf in den Kochraum einzuleiten, und ein tragbares Gefäß, das entfernbar am Ofen montiert ist und einen Auslass und einen Einlass aufweist, die mit dem Einlass bzw. Ablauf des Dampferzeugers fluidisch gekoppelt sind.

Die Beschreibung des Standes der Technik ist vorgesehen, um das Verständnis des Hintergrundes der vorliegenden Erfindung zu fördern, und kann Gegenstände außerhalb des Standes der Technik umfassen, der einem Durchschnittsfachmann bekannt ist.

### Der Erfindung zugrundeliegende Aufgabe

Es ist eine Aufgabe der vorliegenden Erfindung, ein gegenüber dem Stand der Technik verbessertes Dampfgargerät bereitzustellen, dass die oben beschriebenen Nachteile beseitigt, während die aus dem Stand der Technik erzielten Vorteile beibehalten werden.

### Erfindungsgemäße Lösung

Die Lösung der gestellten Aufgabe gelingt durch ein Dampfgargerät mit den Merkmalen des Anspruchs 1. Erfindungsgemäß kann dies bei einem Dampfgargerät nach dem Oberbegriff des Anspruchs 1 , bei welchem die Ventileinheit zwei voneinander separat ausgebildete Ventile aufweist, dadurch erreicht werden, dass die Aufnahmeeinheit an einem Blendenträger des Dampfgargeräts rückseitig angebracht ist und eine im Wesentlichen längliche Bauform aufweist.

Bei dem erfindungsgemäßen Dampfgargerät ist in einem Betriebszustand des Dampfgargeräts eines der Ventile zum Führen von Wasser und das andere der Ventile zum Führen von Luft eingerichtet, wobei das zum Führen von Luft eingerichtete Ventil in der Einbaulage oberhalb des zum Führen von Wasser eingerichteten Ventils angeordnet sein kann. Hierdurch kann sichergestellt werden, dass die Luft separat von dem Wasser geführt werden kann. Es ist vorstellbar, dass die beiden Ventile an der Rückseite des Wassertanks mit einem maximalen Abstand voneinander und/oder in einer Ebene, die im Wesentlichen senkrecht zu einer Haupterstreckungsrichtung des Wassertanks liegt, angeordnet sind.

Bei dem erfindungsgemäßen Dampfgargerät ist weiter vorgesehen, dass die Wasserversorgungseinheit eine Aufnahmeeinheit zur Aufnahme des Wassertanks aufweist, wobei die Aufnahmeeinheit an dem Blendenträger des Dampfgargeräts angebracht ist und die im Wesentlichen längliche, vorzugsweise zylindrische, weiter vorzugsweise kreiszylindrische Bauform aufweist. Die Aufnahmeeinheit weist bevorzugt eine untere und eine obere Gehäuseschale auf und ist bevorzugt aus einem Kunststoff hergestellt. Es ist besonders vorteilhaft, wenn die Aufnahmeeinheit eine Schnittstelle/Anbindung aufweist, die der Schnittstelle/Anbindung eines ebenfalls an dem Blendenträger angeordneten Knebeltopfes entspricht. Dadurch wären Vorteile sowohl bei der Herstellung als auch bei der Montage erzielbar, da in dem Blendenträger für die Aufnahmeeinheit keine unterschiedlichen Öffnungen/Durchbrüche hergestellt werden müssen. Vorzugsweise kann, insbesondere an einer Außenseite der Aufnahmeeinheit, ein Mikroschalter angeordnet sein, durch welchen erfasst werden kann, ob der Wassertank vollständig gekoppelt ist. Beispielsweise könnte bei einer fehlerhaften, also unvollständigen Kopplung des Wassertanks durch den Mikroschalter an eine Steuerung des Dampfgargeräts ein Signal über die fehlerhafte Kopplung ausgegeben werden, so dass wiederum eine entsprechende Nachricht an einen Benutzer ausgegeben werden könnte.

Es kann vorgesehen sein, dass in einem den Wassertank aufnehmenden Gehäuse eine Positionierungshilfe bzw. zumindest ein Führungsmittel vorgesehen ist, wodurch der Wassertank in die korrekte Einbaulage zum fluidtechnischen Koppeln mit der Ventileinheit gebracht werden kann. Durch die Positionierungshilfe und/oder das Führungsmittel, die/das beispielsweise eine an einer Innenwand des Gehäuses gebildete Rille und/oder einen Vorsprung und/oder eine Ausbuchtung aufweist, ist somit eine Kontur innerhalb des Gehäuses geschaffen, so dass hierdurch, unabhängig von der Position beim Einführen des Wassertanks in das Gehäuse, jederzeit eine ordnungsgemäße Einbaulage desselben gewährleistet werden kann. Es versteht sich, dass die Positionierungshilfe oder das Führungsmittel durch zumindest ein anderes Element gebildet sein kann, wodurch ebenfalls eine Art "Verdrehsicherung des Wassertanks" im Sinne der zuvor beschriebenen Art gewährleistet werden kann.

Unter einem Dampfgargerät soll jegliches Haushaltsgerät verstanden werden, welches in einen Garraum eingebrachtes Gargut mittels Wasserdampf gart und/oder ein Gargutergebnis verbessert. Es versteht sich, dass das Dampfgargerät sowohl ein Gargerät, beispielsweise ein Backofen, mit einer Dampffunktion, bei dem neben dem erzeugten Wasserdampf noch weitere Wärmequellen in Form von zum Beispiel Heizkörpern vorhanden sind, als auch ein Dampfgargerät, das ausschließlich Wasserdampf zum Erhitzen/Garen von Gargut verwendet, sein kann.

Die Wasserversorgungseinheit kann neben dem oben erwähnten Wassertank auch weitere Komponenten aufweisen, die für die Versorgung einer Verdampfereinheit mit Wasser erforderlich sein können. Dazu zählen beispielsweise eine Wasserzuführungseinheit, die den Wassertank mit der Verdampfereinheit verbindet, sowie alle Arten von Leitungen und/oder Leitungssystemen sowie Anschluss- und/oder Verbindungselemente. Die Wasserzuführungseinheit weist an einem ersten Endabschnitt Mittel zur Kopplung mit dem Wassertank und an einem zweiten Endabschnitt Mittel zur Kopplung mit der Verdampfereinheit auf. Insbesondere ist die Wasserversorgungseinheit derart eingerichtet, dass sie einen Wasserkreislauf nach dem Prinzip der Vogeltränke ermöglicht. Dieses Vogeltränke-Prinzip ist dem Fachmann gut bekannt, weshalb eine ausführliche Beschreibung desselben weggelassen werden kann.

Das in dem Wassertank bevorratete Wasser kann im Betrieb an eine im Dampfgargerät angeordnete Verdampfereinheit zugeführt werden. Mittels der Verdampfereinheit kann Dampf erzeugt und in den Garraum des Dampfgargeräts bereitgestellt werden. Die Funktion einer Verdampfereinheit ist dem Fachmann gut bekannt, weshalb eine ausführliche Beschreibung derselben weggelassen werden kann.

Die durch zwei Ventile gebildete Ventileinheit ist in Einbaulage des Wassertanks an einer Rückseite desselben angeordnet. Unter einer Einbaulage des Wassertanks soll die Lage verstanden werden, in welcher der Wassertank in dem Dampfgargerät, beispielsweise in einer dafür vorgesehenen Halterung, aufgenommen und insbesondere betriebsbereit ist. Die Ventileinheit kann in/an einer Auslassöffnung, die an dem Wassertank oder einem Grundkörper des Wassertanks gebildet ist, vorgesehen sein.

Durch zwei voneinander separat ausgebildete Ventile ist es möglich, dass Luft und Wasser in separaten Leitungen geführt werden kann, um gemäß dem Prinzip der Vogeltränke zu arbeiten. Dies führt wiederum dazu, dass die Durchmesser der einzelnen Rohrleitungen der Wasserzuführungseinheit verringert werden können, was gegenüber einer Lösung mit nur einem Ventil thermische Vorteile aufgrund von geringeren Wärmeverlusten, die durch eine Rückkopplung der Wärme des Verdampfers in Richtung des Wassertanks entstehen, hat. Das heißt, dass durch die verringerten Durchmesser der einzelnen Ventile beziehungsweise der Rohrleitungen die Wärmeleitung von der innerhalb eines Garraums des Dampfgargeräts angeordneten Verdampfereinheit in Richtung des Wassertanks reduziert werden kann. Außerdem können für die Rohrleitungen in angrenzenden Bauteilen geringere Durchbrüche vorgesehen werden. Als Ergebnis weist die Verdampfereinheit einen geringeren Einfluss auf das gesamte Dampfgargerät hinsichtlich des Temperaturhaushaltes auf.

Vorteilhafte Aus- und Weiterbildungen, die einzeln oder in Kombination miteinander eingesetzt werden können, sind Gegenstand der abhängigen Ansprüche.

Gemäß einer Ausführungsform der Erfindung sind die Ventile in einer Einbaulage des Wassertanks im Wesentlichen übereinander angeordnet. Hierdurch kann ein für das Vogeltränke-Prinzip erforderlicher Wasserkreislauf mit einfachen Mitteln realisiert werden.

Die beiden Ventile können baugleich sein. Das heißt, die beiden Ventile können beispielsweise den gleichen Strömungsquerschnitt aufweisen. Die Ventile sind in nicht einschränkender Weise in Form eines Aufstoß-Ventils gebildet. Das zum Führen von Wasser eingerichtete Aufstoß-Ventil lässt das im Wassertank bevorratete Wasser im Betriebszustand des Dampfgargeräts in Richtung eines Behälters der Verdampfereinheit ablaufen, sobald die Ventileinheit mit einem Anschlusselement oder Andockstutzen einer Wasserzuführungseinheit gekoppelt oder verbunden ist. Aufgrund des Vogeltränke-Prinzips füllt sich der Behälter der Verdampfereinheit, bis das Wasser im Behälter ein bestimmtes Niveau erreicht hat. Bei diesem Füllvorgang wird die durch das Wasser verdrängte Luft aus dem Behälter der Verdampfereinheit zurück in den Wassertank geleitet. Somit handelt es sich um einen geschlossenen Kreislauf.

Es versteht sich für einen Durchschnittsfachmann, dass im Falle einer durch eine obere und untere Gehäuseschale gebildeten Aufnahmeeinheit beide Gehäuseschalen beispielsweise jeweils die Form eines entsprechenden Halbzylinders aufweisen können. Darüber hinaus versteht es sich, dass sich die längliche, vorzugsweise zylindrische oder kreiszylindrische Bauform nicht über die gesamte Länge der Aufnahmeeinheit erstrecken muss, sondern lediglich ein bestimmter oder vorgegebener Abschnitt diese Form aufweist. Insbesondere weist dieser Abschnitt eine Länge auf, die 50%, bevorzugt 60% und weiter bevorzugt mehr als 70% der Gesamtlänge in Erstreckungsrichtung der Aufnahmeeinheit entspricht. Insbesondere weist die oben erwähnte Form im Wesentlichen eine Länge auf, die der Länge des im Betriebszustand eingeführten Wassertanks entspricht.

Gemäß einer weiteren Ausführungsform der vorliegenden Erfindung weist die Aufnahmeeinheit ein Adapterteil mit zwei ersten Anschlussmitteln zum fluidtechnischen Koppeln mit dem Wassertank in einer Betriebsstellung einerseits und mit zwei zweiten Anschlussmitteln zum fluidtechnischen Koppeln mit der Verdampfereinheit andererseits auf. Unter fluidtechnisch Koppeln soll verstanden werden, dass nach erfolgter Kopplung beispielsweise das im Wassertank bevorrate Wasser in Richtung des zweiten Anschlussmittels und somit weiter in Richtung der Verdampfereinheit fließen kann und/oder die im Leitungssystem befindliche Luft aufgrund des Vogeltränke-Prinzips und somit eines geschlossenen Kreislaufes zurück in den Wassertank strömen kann. Dadurch kann eine einfache und sichere Kopplung zwischen dem Wassertank und der Verdampfereinheit sowie des Wassertanks in der Aufnahmeeinheit realisiert werden.

Gemäß einer weiteren bevorzugten Ausführungsform der vorliegenden Erfindung weist das Adapterteil zumindest einen Rasthaken zum Verrasten des Wassertanks mit dem Adapterteil auf, wobei der Rasthaken mit einem am Grundkörper des Wassertanks gebildeten Rastabschnitt oder Rastvorsprung im vollständig eingeschobenen Zustand des Wassertanks verrastet wird. Der Rasthaken kann bevorzugt an einem umfangsseitigen Abschnitt des Adapterteils vorgesehen sein. Als Ergebnis weist das Adapterteil somit im Wesentlichen zwei Funktionen auf, und zwar einerseits ein Ermöglichen einer fluidtechnischen Kopplung zwischen Wassertank und Verdampfereinheit und andererseits das sichere Verrasten des Wassertanks in seiner Betriebsstellung.

Gemäß noch einer weiteren bevorzugten Ausführungsform der vorliegenden Erfindung weist das Adapterteil zwei voneinander separat ausgebildete Verbindungselemente auf, durch die jeweils ein erstes Anschlussmittel und ein zweites Anschlussmittel gebildet sind. Die Verbindungselemente können beispielsweise durch Dichtungsstifte oder dergleichen gebildet sein. Mittels der separat gebildeten Verbindungselemente kann mit einfachen Mitteln eine getrennte Luft- und Wasserführung ermöglicht werden. Darüber hinaus können aufgrund der Einstückigkeit der Verbindungselemente Kosten gespart werden. bevorzugt können beide Verbindungselemente baugleich sein und somit die gleichen Strömungsquerschnitte aufweisen.

Vorzugsweise sind die ersten Anschlussmittel jeweils durch einen Dichtungsstutzen zum fluidtechnischen Koppeln mit den Ventilen gebildet, wobei ein Verbindungselement den Dichtungsstutzen aufweisen kann. Dadurch kann beispielsweise eine sichere Kopplung mit den im Wassertank angeordneten Ventilen erreicht werden, so dass ein Austreten von Wasser über die Verbindungselemente verhindert werden kann. Es ist weiter bevorzugt, wenn die Dichtungsstutzen im Wesentlichen in einer Betätigungsrichtung des Wassertanks, insbesondere federkraftbeaufschlagt, an dem Adapterteil abgestützt sind. Dadurch kann nochmals eine verbesserte Dichtwirkung realisiert werden. Für den Fall, dass das Adapterteil zwei voneinander separat ausgebildete Verbindungselemente aufweist, durch welche jeweils ein erstes Anschlussmittel und ein zweites Anschlussmittel gebildet sind, weist das Verbindungselement den Dichtungsstutzen auf oder ist der Dichtungsstutzen durch zumindest einen Abschnitt des Verschlusselements gebildet.

Gemäß einer weiteren bevorzugten Ausführungsform der vorliegenden Erfindung weisen die Dichtungsstutzen jeweils eine Dichtung, vorzugsweise eine als O-Ring gebildete Gummidichtung auf. Dadurch kann ein Austritt von Flüssigkeit in Form von Wasser sicher verhindert werden. Die O-Ringe können beispielsweise zwischen einem umfangsseitigen Flanschabschnitt, der an einem Endabschnitt des Verbindungselements gebildet ist, und einem umfangsseitigen Rand, der an einem Grundkörper des Verbindungselements gebildet ist, vorgesehen sein, so dass der jeweilige O-Ring sicher gehalten ist.

Vorzugsweise ist das Adapterteil in einem in der Aufnahmeeinheit gebildeten Lagerabschnitt im Wesentlichen in einer Betätigungsrichtung des Wassertanks verschiebbar gelagert, wodurch beispielsweise ein Mechanismus zum Ein- und Ausführen des Wassertanks realisiert werden kann. Das Ein- und Ausführen kann sowohl manuell als auch in Form eines Elektromotors vorgesehen werden. Im Falle des Elektromotors könnte dann beispielsweise eine Taste in der Bedienblende vorgesehen werden, um das Ein- und/oder Ausführen des Wassertanks zu starten. Die Betätigungsrichtung des Wassertanks entspricht der Richtung, in die der Wassertank in die Aufnahmeeinheit eingeführt und daraus entnommen werden kann.

Es ist besonders bevorzugt, wenn das Adapterteil eine Kulisse aufweist und durch eine Feder im Wesentlichen in der Betätigungsrichtung federkraftbeaufschlagt ist, wobei in die Kulisse ein Kulissenstein eingreift, der insbesondere in einer Halteklammer geführt ist. Dadurch kann in einfacher Weise eine Einheit/Anordnung zum Ein- und/oder Ausführen des Wassertanks realisiert werden. Insbesondere ist eine sogenannte Herzkurve als Kulisse vorgesehen. Das Vorsehen einer Feder/Druckfeder, die das Adapterteil mit einer Federkraft beaufschlagt, weist den Vorteil auf, dass die Einheit/Anordnung und somit der Wassertank in fest definierte Positionen bringbar ist und sich keine Zwischenstellungen ergeben können. Die Feder kann sich gemäß einer Weiterbildung an einer Sicherungsfeder oder einem Sicherungsbügel abstützen, die bzw. der an der Aufnahmeeinheit, bevorzugt an der unteren Gehäuseschale, angeordnet ist. Es kann jedoch auch vorgesehen sein, dass sich die Feder/Druckfeder zumindest abschnittsweise an einem an der Aufnahmeeinheit umfangsseitig gebildeten Rand abstützt. Der Kulissenstein kann vorzugsweise in einem Längsschlitz einer Halteklammer geführt werden, die an der unteren Gehäuseschale oder oberen Gehäuseschale angeordnet sein kann. Der Längsschlitz verläuft im Wesentlichen senkrecht zu einer Haupterstreckungsrichtung des Wassertanks beziehungsweise zu der zuvor erwähnten Betätigungsrichtung desselben.

Gemäß noch einer weiteren bevorzugten Ausführungsform der vorliegenden Erfindung weist der Wassertank an der einem Benutzer zugewandten Vorderseite des Wassertanks ein Verschlusselement auf, das vorzugsweise durch einen Bajonett- oder Schraubverschluss an einem Grundkörper des Wassertanks befestigbar ist. Der Wassertank weist in Einbaulage eine einem Benutzer zugewandte Vorderseite und eine der Vorderseite gegenüberliegende Rückseite auf. Das Verschlusselement kann zumindest abschnittsweise die Vorderseite oder die Rückseite des Wassertanks bilden. Darunter soll verstanden werden, dass die einem Benutzer des Dampfgargeräts zugewandte Frontfläche des Verschlusselements zumindest einen Teil der Vorder- oder Rückseite bildet. Somit wäre es auch denkbar, dass die Frontfläche des Verschlusselements ein Flächenmaß aufweist, das kleiner als das Flächenmaß der Querschnittsfläche des Wassertanks ist, wobei die Frontfläche und die Querschnittsfläche im Wesentlichen parallel zueinander sind. Es ist jedoch ebenso vorstellbar, dass die Frontfläche ein Flächenmaß aufweist, das größer als das der Querschnittsfläche ist. Dies könnte insbesondere dann vorteilhaft sein, wenn ein Durchmesser des Wassertanks beziehungsweise dessen Querschnittsfläche kleiner als der Durchmesser beziehungsweise die Querschnittsfläche des in die Bedienblende des Dampfgargeräts zu integrierenden Verschlusselements ist. Somit ließe sich ein Wassertank in die Bedienblende integrieren, dessen Verschlusselement beispielsweise die gleiche Optik und/oder Größe und/oder Form wie ein daneben angeordneter Bedienknebel des Dampfgargeräts aufweist.

Erfindungsgemäß ist es vorgesehen, dass das Verschlusselement die Vorderseite oder die Rückseite des Wassertanks bilden kann. Bildet das Verschlusselement zumindest abschnittsweise die Vorderseite des Wassertanks, dann ist die Frontfläche des Verschlusselements in Einbaulage des Wassertanks dem Benutzer zugewandt. Im Gegensatz dazu, wenn das Verschlusselement zumindest abschnittsweise die Rückseite des Wassertanks bildet, ist die Frontfläche des Verschlusselements dem Benutzer abgewandt und somit für den Benutzer nicht sichtbar. Somit würde der vor dem Dampfgargerät stehende Benutzer lediglich den Boden bzw. Bodenbereich sehen können, wohingegen die durch das Verschlusselement gebildete Rückseite des Wassertanks im Gerät verdeckt liegt. Es versteht sich für den Durchschnittsfachmann, dass im letzteren Fall in dem Verschlusselement Mittel/Komponenten vorgesehen sind, die zum Verbinden/Koppeln mit der Wasserversorgungseinheit eingerichtet sind. Somit besteht der Unterschied zwischen den beiden beschriebenen Varianten lediglich darin, dass die Anbringung des Verschlusselements seitenvertauscht ist.

Aus Designsicht ist es dabei besonders wünschenswert, dass die Vorderseite oder die Rückseite des Wassertanks mit der Frontfläche der Bedienblende im Wesentlichen bündig ist. Das heißt, die Vorder- oder Rückseite des Wassertanks ist in Einbaulage desselben derart in die Bedienblende integriert, dass keine störenden Komponenten vorhanden sind, welche in Bezug auf eine Frontfläche der Bedienblende in Richtung eines Benutzers hervorragen oder zurückversetzt angeordnet sind. Dadurch lässt sich in vorteilhafter Weise ein homogenes Erscheinungsbild realisieren. Das Verschlusselement beziehungsweise die Vorderseite des Verschlusselements ist grifflos und ist insbesondere eben ausgebildet, so dass sich eine gute Integration in die Bedienblende realisieren lasst. Das Verschlusselement verschließt eine Einfüllöffnung des Wassertanks derart, dass bei Einbaulage des Wassertanks kein Wasser mehr austreten kann. Dadurch, dass das Verschlusselement zumindest abschnittsweise die Vorderseite oder die Rückseite des Wassertanks bildet, lässt sich ein positives Erscheinungsbild des Dampfgargeräts realisieren, da sich die jeweilige Seite des Wassertanks vorteilhaft in das Design des Geräts integrieren lässt, ohne Einbußen bezüglich des Benutzerkomforts beim Entnehmen/Befüllen des Wassertanks hinnehmen zu müssen. Das heißt, aus Designsicht ist nahezu die vollständige Integration der Wasserversorgungseinheit beziehungsweise des Wassertanks in einen Blendenträger bzw. eine Bedienblende des Dampfgargeräts möglich.

Vorzugsweise weist ein Grundkörper des Wassertanks eine im Wesentlichen längliche, vorzugsweise zylindrische, weiter vorzugsweise kreiszylindrische, Bauform auf, weshalb das eingefüllte Wasser in diesem (Haupt-)Teil des Wassertanks bevorratet ist. Dies hätte den Vorteil, dass sich einerseits in Bezug auf neben dem Wassertank in/an der Bedienblende des Dampfgargeräts angeordnete Bedienknebel ein verbessertes optische Ergebnis als auch eine verbesserte Handhabung beim Befüllen des Wassertanks erzielen ließe. Das heißt, der vor dem Dampfgargerät stehende Benutzer würde zu dem Eindruck gelangen können, dass es sich bei dem eingeschobenen Wassertank, also in Einbaulage, optisch um einen Bedienknebel handelt. Es ist weiterhin bevorzugt, dass an dem im Wesentlichen transparenten Grundkörper des Wassertanks Markierungen über den Füllstand vorgesehen sind. Der Grundkörper kann in nicht einschränkender Weise aus Kunststoff hergestellt sein. Es versteht sich, dass der gesamte Wassertank aus Kunststoff hergestellt sein kann. Es ist jedoch auch vorstellbar, dass das Verschlusselement ein anderes Material als das des Grundkörpers aufweist. Das Verschlusselement ist an einem ersten Endabschnitt des Grundkörpers, beispielsweise durch eines der oben erwähnten Verschlussarten, anbringbar, wobei der Grundkörper an dem ersten Endabschnitt eine der Verschlussart entsprechende Ausgestaltung, beispielsweise ein Gewinde, Teil eines Bajonettverschlusses oder dergleichen, aufweist. An dem zweiten Endabschnitt des Grundkörpers, der dem ersten Endabschnitt gegenüberliegt, ist eine Auslassöffnung vorgesehen, in der eine Ventileinheit angebracht ist, die später beschrieben wird.

Zur besseren Abdichtung kann das das Verschlusselement eine Dichtung, insbesondere eine Gummidichtung, aufweisen. Dadurch kann eine verbesserte Dichtwirkung erzielt werden. Es kann beispielsweise vorgesehen sein, dass die Dichtung einen Außendurchmesser aufweist, der im Wesentlichen einem Innendurchmesser des Verschlusselements entspricht. Die Dichtung liegt dabei im Schließzustand des Verschlusselements im Wesentlichen an einem stirnseitigen Frontabschnitt des Grundkörpers an. Die Dichtung kann lose in das Verschlusselement eingelegt werden oder fest mit diesem verbunden sein. Bei einer einstückigen/integralen Ausbildung des Verschlusselements und der Dichtung könnte ein Verlust der losen Dichtung verhindert werden.

Vorzugsweise ist die Gummidichtung als O-Ring ausgebildet, der in einer Schließstellung des Verschlusselements durch eine Feder gegen eine Dichtkante des Grundkörpers gedrückt ist. Somit kann eine nochmals verbesserte Dichtwirkung erzielt werden. Als Feder können in der gesamten Offenbarung in nicht einschränkender Weise jede Art von Feder, wie beispielsweise eine Schraubenfeder, Spiralfeder oder dergleichen, verwendet werden. Besonders bevorzugt ist es, dass der O-Ring auf einem Dichtungsträger, insbesondere topfförmigen Dichtungsträger, angeordnet ist und dass die Feder zwischen einem Verschlussdeckel des Verschlusselements und dem Dichtungsträger angeordnet ist. Diese Anordnung weist den Vorteil auf, dass die Dichtung in Form des O-Rings federkraftbeaufschlagt gegen die am Grundkörper gebildete Dichtkante gedrückt wird, weshalb die Dichtwirkung nochmals verstärkt wird. Darüber hinaus ist es vorgesehen, dass der Dichtungsträger derart ausgeführt ist, dass er, beispielsweise mittels einer Verrastung, an dem Verschlussdeckel angebracht ist. Hierdurch ließe sich ein Verschlusselement in Form einer kompakten Baueinheit herstellen, die den Verschlussdeckel, die Dichtung, den Dichtungsträger und die zwischen Dichtungsträger und Verschlussdeckel angeordnete Feder aufweist. In diesem Zusammenhang ist an dem Dichtungsträger eine umfangsseitige Nut/Vertiefung vorgesehen, an/in die der O-Ring anbringbar ist. Die Nut ist insbesondere an einem dem Grundkörper des Wassertanks zugewandten Endabschnitt angeordnet.

Gemäß noch einer weiteren bevorzugten Ausführungsform der vorliegenden Erfindung weist das Verschlusselement eine Abdeckkappe auf, die in Einbaulage zumindest abschnittsweise die einem Benutzer zugewandte Vorderseite des Wassertanks bildet. Hiermit kann eine spezielle Anpassung an das vorhandene Design des Dampfgargeräts erzielt werden. Dies betrifft insbesondere die Fälle, in denen verschiedene Blendenmaterialen, wie beispielsweise Glas, Metall oder dergleichen, verwendet werden. Darüber hinaus ist es durch eine in das Erscheinungsbild des Dampfgargeräts integrierte Abdeckkappe möglich, verschiedene Designlinien eines Hausgeräte-Herstellers abzudecken. Dabei ist es besonders bevorzugt, wenn das Verschlusselement beziehungsweise der Verschlussdeckel eine Schnittstelle/Anbindung aufweist, die der Schnittstelle/Anbindung des Bedienknebels entspricht. Im Falle der Anbringung der Abdeckkappe ist es ebenfalls vorgesehen, dass die Vorderseite des Wassertanks mit der Frontfläche der Bedienblende bündig ist.

Gemäß einer Ausführungsform der Erfindung ist der Wassertank mittels einer Push-Push-Einheit aus dem Dampfgargerät entnehmbar ist. Es kann jedoch alternativ dazu auch jedes andere Prinzip verwendet werden, das zum Ein- und Ausführen des Wassertanks geeignet ist. Beispielsweise kann auch eine Entriegelungsmechanik vorgesehen sein, die beispielsweise durch eine an der Bedienblende angebrachte Entriegelungstaste betätigt wird. In diesem Fall würde eine Betätigung der Taste zu einem zumindest teilweisen Auswurf des Wassertanks führen. Die Verriegelung in der Aufnahmeeinheit könnte dann zum Beispiel durch Einführen und Verrasten desselben durch den Benutzer realisiert werden. Bei Verwenden einer Push-Push-Einheit kann es in uneingeschränkter Weise drei wesentliche Zustände geben. Erstens einen eingefahrenen Zustand, der einem Betriebszustand des Wassertanks entspricht, in welchem der Wassertank vollständig angedockt ist, so dass Wasser aus dem Wassertank in Richtung der Verdampfereinheit ausgetragen werden kann. In diesem Zustand ist die Vorderseite des Wassertanks im Wesentlichen bündig mit der Frontfläche der Bedienblende. Ein zweiter Zustand kann einem überdrückten Zustand nach Betätigung der Push-Push-Einheit entsprechen. Hierbei wird auf die Vorderseite des Wassertanks gedrückt, bis der Wassertank eine Endposition aufgrund des in der Kulisse geführten Kulissensteines erreicht. In diesem überdrückten Zustand befindet sich die Vorderseite in Bezug auf die Frontfläche zurückversetzt. Der Versatz nach hinten, also in Einführrichtung des Wassertanks, kann beispielsweise ungefähr 3 mm betragen. Ein dritter Zustand kann einem ausgefahrenen Zustand des Wassertanks entsprechen. Der ausgefahrene Zustand wird erreicht nach Wegnehmen der durch das Drücken erzeugten Kraft auf die Vorderseite des Wassertanks, bis der Wassertank eine weitere Endposition aufgrund des in der Kulisse in Eingriff stehenden Kulissensteins erreicht. In diesem ausgefahren Zustand ragt die Vorderseite des Wassertanks in Bezug auf die Frontfläche der Bedienblende in Richtung eines Benutzers vor. Der entsprechende Versatz nach vorne kann ungefähr 18 mm betragen, so dass ein ausreichend großer Bereich zum Anfassen und Herausnehmen des Wassertanks vorhanden ist.

Durch die erfindungsgemäße Ausgestaltung der Ventileinheit kann die Wärmebilanz des gesamten Dampfgargeräts verbessert werden. Das Dampfgargerät weist zudem eine einfache Wasserversorgungseinheit mit einem leicht zu befüllenden Wassertank auf und ist somit weniger störungsanfällig als die aus dem Stand der Technik bekannten Geräte. Weiterhin wird durch die spezielle Ausgestaltung des vollständig entnehmbaren Wassertanks der Befüllvorgang vereinfacht, da der Wassertank mit Hilfe eines normalen Wasserhahns befüllt werden kann. Nach einem Befüllvorgang kann der Wassertank durch das Verschlusselement verschlossen werden und in die am Dampfgargerät vorgesehene Aufnahmeeinheit eingeführt werden. Hierbei ist es ebenfalls vorstellbar, dass an dem Wassertank und/oder der Aufnahmeeinheit eine Verdrehsicherung vorgesehen ist.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in den jeweils angegebenen Kombination, sondern auch in anderen Kombinationen oder in Alleinstellung verwendbar, ohne den Rahmen der Erfindung zu verlassen.

### Kurzbeschreibung der Zeichnungen

Die obigen und weiteren Merkmale der vorliegenden Erfindung werden nun mit Bezug auf bestimmte Ausführungsbeispiele davon ausführlich beschrieben, welche durch die beigefügten Zeichnungen dargestellt sind, und welche im Folgenden nur zur Veranschaulichung dienen, und somit nicht für die vorliegende Erfindung einschränkend sind. In der Zeichnung zeigen:
Fig. 1 eine perspektivische Ansicht, die ein Haushaltsgerät in Form eines Dampfgargeräts gemäß einem ersten Ausführungsbeispiel der vorliegenden Erfindung schematisch darstellt;
Fig. 2 eine perspektivische Ansicht, die einen Ausschnitt des Dampfgargeräts von Fig. 1 ohne ein oberes Gehäuseteil schematisch darstellt;
Fig. 3 eine perspektivische Ansicht der Rückseite eines Wassertanks des Dampfgargeräts gemäß dem ersten Ausführungsbeispiel der der vorliegenden Erfindung;
Fig. 4 eine schematische Schnittdarstellung eines hinteren Abschnitts des Wassertanks von Fig. 3 entlang der Schnittebne IV-IV aus Fig. 3;
Fig. 5 eine schematische Explosionsdarstellung eines Verschlusselements eines Dampfgargeräts gemäß einem zweiten Ausführungsbeispiel der vorliegenden Erfindung;
Fig. 6 eine schematische Schnittdarstellung entlang der Schnittebene IV-IV aus Fig. 5, wobei das Verschlusselement an einem Grundkörper des Wassertanks montiert ist.

Es ist zu beachten, dass die beigefügten Zeichnungen nicht notwendigerweise maßstabgerecht sind und eine etwas vereinfachte Darstellung von verschiedenen bevorzugten Merkmalen darstellen, die der Veranschaulichung der Grundsätze der Erfindung dienen. Die spezifischen Konstruktionsmerkmale der vorliegenden Erfindung, wie sie hierin offenbart sind, einschließlich z.B. spezifischer Abmessungen, Orientierungen, Einbauorte und Formen werden zum Teil durch die eigens dafür vorgesehene Anmeldung und die Arbeitsumgebung bestimmt.

In den Figuren werden gleiche oder funktionsgleiche Elemente mit den gleichen Bezugszeichen versehen.

### Ausführliche Beschreibung der Figuren

Ausführungsbeispiele der vorliegenden Erfindung werden im Folgenden unter Bezugnahme auf die beigefügten Zeichnungen ausführlich beschrieben.

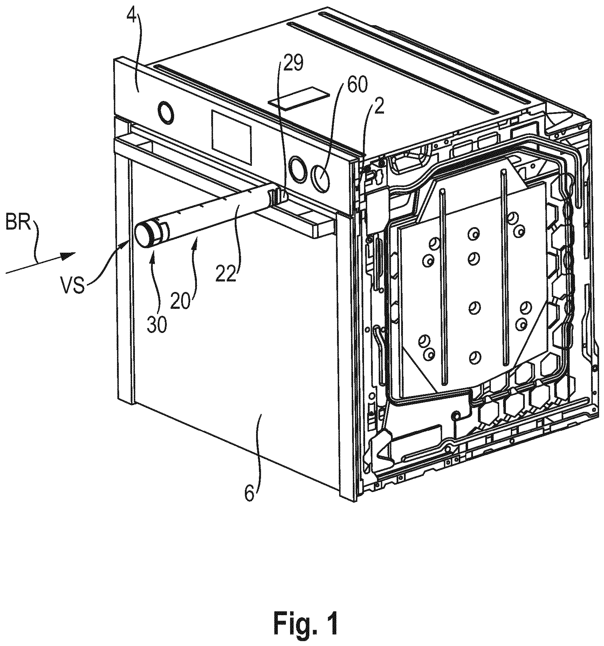

In Fig. 1 ist in einer vereinfachten schematischen Darstellung eine perspektivische Ansicht eines Haushaltsgeräts in Form eines Dampfgargeräts gemäß einem ersten Ausführungsbeispiel der vorliegenden Erfindung dargestellt. Das Dampfgargerät weist einen hinter einer Tür 6 befindlichen Garraum (nicht gezeigt), in welchen Gargut eingebracht werden kann, auf. Ein in den Garraum eingebrachtes Lebensmittel wird im Betrieb des Dampfgargeräts durch in den Garraum eingebrachten Wasserdampf gegart. Der Wasserdampf wird durch eine Verdampfereinheit (nicht gezeigt) erzeugt.

Das Dampfgargerät weist eine an einem Blendenträger 2 angebrachte Bedienblende 4 auf, die oberhalb der Tür 6 angeordnet ist. In einem rechten Bereich der Bedienblende 4 kann ein Wassertank 20 in eine Aufnahmeeinheit 60 zur Kopplung mit der Verdampfereinheit eingeführt werden. Der Wassertank 20 weist einen Grundkörper 22 auf, der an der Vorderseite VS durch ein Verschlusselement 30 im gezeigten Zustand verschlossen ist. Der Grundkörper 22 weist eine länglich kreiszylindrische Form auf. An einem dem Dampfgargerät zugewandten Endabschnitt des Grundkörpers 22 ist eine Auslassöffnung 29 gebildet. Der Wassertank 20 kann in der Betätigungsrichtung BR in die Aufnahmeeinheit 60 zum Erreichen einer Betriebsstellung zerstörungsfrei und reversibel eingesetzt und entnommen werden. Das zur Verdampfung vorgesehene flüssige Medium in Form von Wasser ist in dem Wassertank 20 bevorratet.

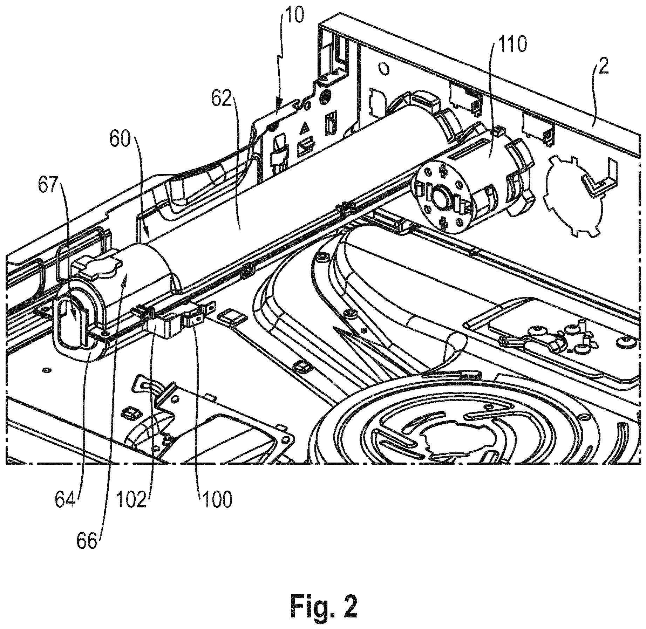

Fig. 2 zeigt eine perspektivische Ansicht, die einen Ausschnitt des Dampfgargeräts von Fig. 1 ohne ein oberes Gehäuseteil des Dampfgargeräts schematisch darstellt. An dem Blendenträger 2 ist eine zweiteilige Aufnahmeeinheit 60 einer Wasserversorgungseinheit 10 rückseitig an einer in dem Blendenträger 2 gebildeten Aussparung angebracht. Es ist gut erkennbar, dass eine Anbindung der Aufnahmeeinheit 60 an dem Blendenträger 2 einer Anbindung eines Knebeltopfes 110 entspricht, weshalb in dem Blendenträger 2 lediglich eine Art von Aussparungen für die Aufnahmeeinheit 60 und den Knebeltopf 110 vorgesehen ist.

Die Aufnahmeeinheit 60 ist aus einem oberen Gehäuseteil 62 und einem unteren Gehäuseteil 64 gebildet. Im montierten Zustand, in dem das obere Gehäuseteil 62 und das untere Gehäuseteil 64 aneinander befestigt sind, weist die Aufnahmeeinheit 60 an einem hinteren Endbereich in Bezug auf den Blendenträger 2 einen Lagerabschnitt 66 auf, der in einer von dem Blendenträger 2 abgewandten Richtung eine Öffnung 67 aufweist. An einem an der Gehäuseaußenwand der Aufnahmeeinheit 60 angebrachten Montageabschnitt 102 ist im Bereich des Lagerabschnitts 66 ein Mikroschalter 100 vorgesehen, um eine Betriebsposition des Wassertanks zu erkennen.

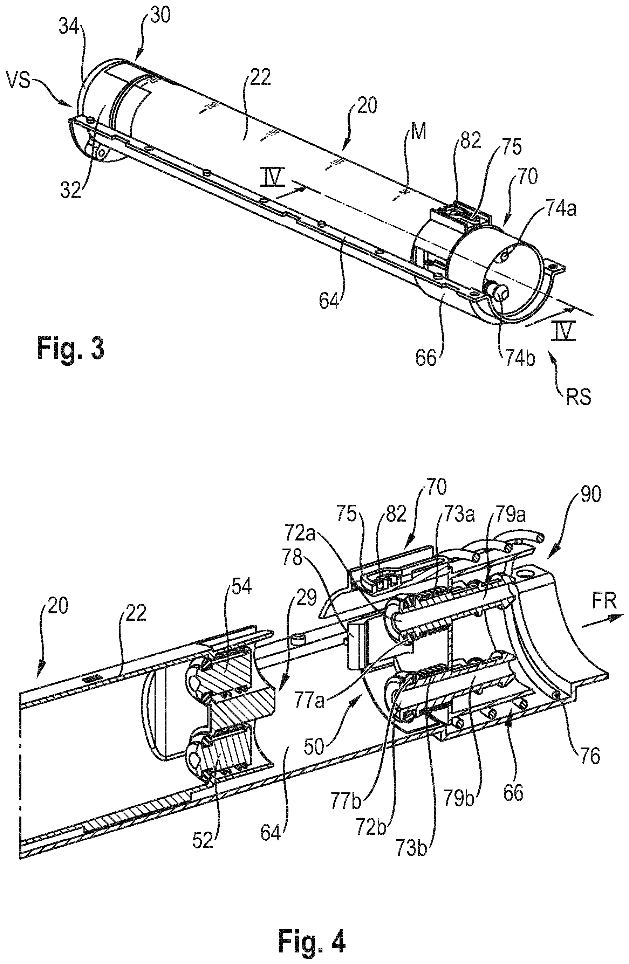

Fig. 3 zeigt eine perspektivische Ansicht der Rückseite des Wassertanks 20 des Dampfgargeräts gemäß dem ersten Ausführungsbeispiel der der vorliegenden Erfindung, wobei der Wassertank 20 in dem unteren Gehäuseteil 64 der Aufnahmeeinheit 60 aufgenommen ist. An dem Grundkörper 22 des Wassertanks 20 ist an der einem Benutzer zugewandten Vorderseite VS ein Verschlussdeckel 32 angebracht, der den Wassertank 20 wasserdicht verschließt. Zur besseren Integration des Wassertanks 20 in das Design des Dampfgargeräts ist an der einem Benutzer zugewandten Seite eine Abdeckkappe 34 angebracht, die das gleiche Design wie die Blende und/oder der Knebel des Dampfgargeräts aufweist. An einer Oberseite des Grundkörpers 22 sind Markierungen M vorgesehen, um in einem Einfüllzustand des Wassertanks 20 die eingefüllte Menge des Wassers anzugeben.

An der Rückseite RS des Wassertanks 20 ist ein Adapterteil 70 angebracht, das in einem Lagerabschnitt 66 der Aufnahmeeinheit 60 aufgenommen ist. Das Adapterteil 70 weist an seiner Oberseite eine Kulisse 75 in Form einer Herzkurve auf. In der Kulisse 75 ist ein Kulissenstein 82 geführt, um eine Push-Push-Einheit zum Auswerfen des Wassertanks 20 zu realisieren. An der Rückseite des Adapterteils 70 sind zwei zweite Anschlussmittel 74a und 74b erkennbar, die durch einen Schlauch oder eine Rohrleitung mit einer Verdampfereinheit verbindbar sind. Die beiden zweiten Anschlussmittel 74a und 74b sind baugleich und weisen den gleichen Strömungsquerschnitt auf. Zur einfacheren Befestigung eines Schlauches oder einer Rohrleitung weisen die Anschlussmittel 74a und 74b an einem Endabschnitt jeweils einen konisch zulaufenden Aufnahmebereich mit einer hinter dem Aufnahmebereich angeordneten Dichtrille auf.

Fig. 4 zeigt eine schematische Schnittdarstellung eines hinteren Abschnitts des Wassertanks von Fig. 3 entlang der Schnittebne IV-IV aus Fig. 3. Wie aus Fig. 4 gut ersichtlich ist, ist an einem hinteren Endabschnitt des Grundkörpers 22 des Wassertanks 20 in einer Auslassöffnung 29 eine durch zwei Ventile 52 und 54 gebildete Ventileinheit 50 angeordnet. Durch das Ventil 52 und das Ventil 54 kann Wasser beziehungsweise Luft geführt werden.

In einem Lagerabschnitt 66 der Aufnahmeeinheit 60 ist das Adapterteil 70 verschiebbar gelagert. Aufgrund einer sich an einem Rand der Aufnahmeeinheit 60 abstützenden Druckfeder 76 ist das Adapterteil 70 in Richtung des Wassertanks 20 mit einer Federkraft beaufschlagt. An der Oberseite des Adapterteils 70 befindet sich wie bereits in Fig. 3 beschrieben, die Kulisse in Form einer Herzkurve, in der der Kulissenstein 82 geführt ist. Dadurch, dass das Adapterteil 70 in der Aufnahmeeinheit 60 verschiebbar gelagert ist, durch die Druckfeder 76 mit einer Federkraft beaufschlagt ist und an der Oberseite eine Kulisse aufweist, kann eine Push-Push-Einheit realisiert werden, mittels der der Wassertank 20 im Dampfgargerät reversibel eingeführt und entnommen werden kann.

An dem Adapterteil 70 ist ein Rasthaken 78 erkennbar, der mit einem entsprechenden am Grundkörper 22 des Wassertanks 20 gebildeten Rastvorsprung in einem Betriebszustand in Eingriff gebracht werden kann, um den Wassertank 20 sich in der Aufnahmeeinheit 60 zu halten. Obwohl nur ein Rasthaken 78 in Fig. 4 gezeigt ist, sind im konkreten Ausführungsbeispiel zwei Rasthaken 78 vorgesehen.

Das Adapterteil 70 weist zwei voneinander separat gebildete Verbindungselemente 79a und 79b auf, durch die jeweils ein erstes Anschlusselement 72a und 72b in Form eines Dichtungsstutzens 72a' beziehungsweise 72b` und ein zweites Anschlusselement 74a beziehungsweise 74b gebildet sind. Die Verbindungselemente 79a, 79b weisen an einem dem Wassertank 20 zugewandten Abschnitt jeweils eine als O-Ring gebildete Dichtung 77a, 77b auf, die zwischen einem Flanschabschnitt und einem umlaufenden Randabschnitt des jeweiligen Verbindungselements 79a, 79b angeordnet ist. In einem Betriebszustand des Wassertanks 20 ist der dem Wassertank 20 zugewandte Endabschnitt des jeweiligen Verbindungselements 79a, 79b mit dem Ventil 54 beziehungsweise 52 gekoppelt. Die Verbindungselemente 79a und 79b sind durch eine Feder 73a beziehungsweise 73b in Richtung des Wassertanks 20 mit einer Federkraft beaufschlagt.

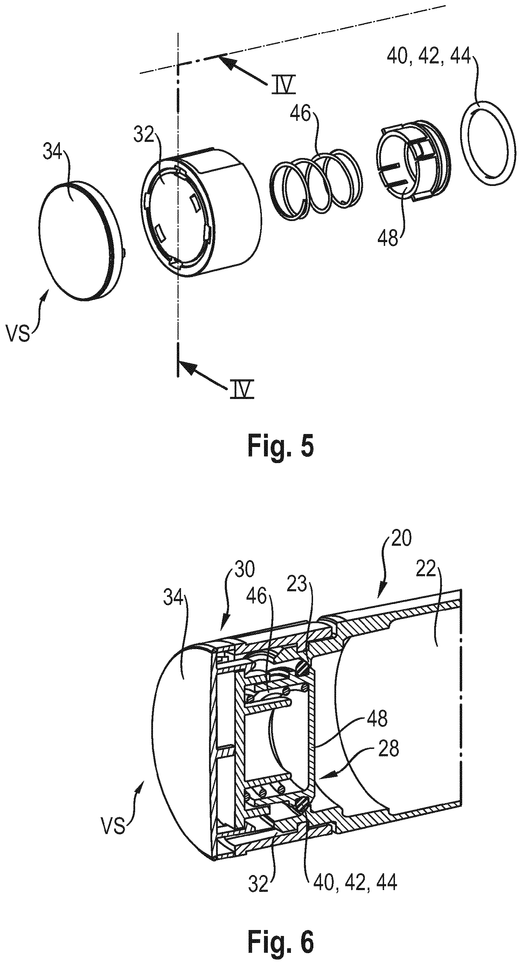

Fig. 5 zeigt eine schematische Explosionsdarstellung eines Verschlusselements eines Dampfgargeräts gemäß einem zweiten Ausführungsbeispiel der vorliegenden Erfindung. Im Gegensatz zum ersten Ausführungsbeispiel ist das Verschlusselement 30 aus einem Verschlussdeckel 32, einer an dem Verschlussdeckel 32 frontseitig angebrachten Abdeckkappe 34, einem Dichtungsträger 48 mit einem darauf montierten O-Ring 44 und einer zwischen dem Dichtungsträger 48 und dem Verschlussdeckel 32 angeordneten Feder 46 gebildet. Der O-Ring 44 ist an dem Dichtungsträger 48 umfangsseitig an einem dem Verschlussdeckel 32 abgewandten Endabschnitt angebracht. Der Dichtungsträger 48 weist an dem dem Verschlussdeckel 32 zugewandten Abschnitt eine Mehrzahl von Rastelementen auf, mit denen der Dichtungsträger 48 an dem Verschlussdeckel 32, mit der dazwischen liegenden Feder 46, befestigt wird. Die Feder 46 ist als Druckfeder ausgeführt, so dass sie sich einerseits an dem Verschlussdeckel 32 abstützt und andererseits den Dichtungsträger 48 mit einer Federkraft beaufschlagt.

Fig. 6 eine schematische Schnittdarstellung entlang der Schnittebene IV-IV aus Fig. 5, wobei das Verschlusselement an einem Grundkörper des Wassertanks montiert ist. Wie aus Fig. 6 ersichtlich ist, wird in dem Zustand, in dem das Verschlusselement 30 mit dem Grundkörper 22 des Wassertanks 20 verschraubt ist, die O-Ring-Dichtung 44 durch die von der Feder 46 erzeugte Federkraft gegen die am Grundkörper 22 gebildete Dichtkante 23 gedrückt. Die Dichtkante 23 ist umfangsseitig im Innenraum des Grundkörpers 22 gebildet. Weiterhin ist in Fig. 6 erkennbar, dass der Grundkörper 22 des Wassertanks 20 an seinem dem Verschlusselement 30 zugewandten Endabschnitt einen Durchmesser aufweist, der kleiner als der Durchmesser außerhalb des Endabschnitts ist. Der Außendurchmesser des Verschlusselements 30 entspricht im Wesentlichen dem Außendurchmesser des Grundkörpers 22 des Wassertanks 20. Der Innendurchmesser des Verschlusselements 30 entspricht im Wesentlichen dem Außendurchmesser des dem Verschlusselement 30 zugewandten Endabschnitts des Grundkörpers 22.

### BEZUGSZEICHENLISTE

- 2: Blendenträger
- 4: Blende
- 6: Tür
- 10: Wasserversorgungseinheit
- 20: Wassertank
- 22: Grundkörper
- 23: Dichtkante
- 28: Befüllöffnung
- 29: Auslassöffnung
- 30: Verschlusselement
- 32: Verschlussdeckel
- 34: Abdeckkappe
- 40: Dichtung
- 42: Gummidichtung
- 44: O-Ring
- 46: Feder
- 48: Dichtungsträger
- 50: Ventileinheit
- 52: Ventil
- 54: Ventil
- 60: Aufnahmeeinheit
- 62: oberes Gehäuseteil
- 64: unteres Gehäuseteil
- 66: Lagerabschnitt
- 67: Öffnung
- 70: Adapterteil
- 72a: erstes Anschlussmittel
- 72b: erstes Anschlussmittel
- 72a': Dichtungsstutzen
- 72b': Dichtungsstutzen
- 73a: Feder
- 73b: Feder
- 74a: zweites Anschlussmittel
- 74b: zweites Anschlussmittel
- 75: Kulisse
- 76: Druckfeder
- 77a: Dichtung
- 77b: Dichtung
- 78: Rasthaken
- 79a: Verbindungselement
- 79b: Verbindungselement
- 82: Kulissenstein
- 90: Push-Pull-Einheit
- 100: Mikroschalter
- 102: Montageabschnitt
- 110: Knebeltopf
- BR: Betätigungsrichtung
- FR: Flussrichtung
- M: Markierung
- VS: Vorderseite
- RS: Rückseite

## Patentansprüche

1. Dampfgargerät mit einer Verdampfereinheit, mit welcher Wasser verdampfbar und der durch die Verdampfereinheit erzeugte Dampf in den Garraum des Dampfgargeräts bereitstellbar ist, und einer Wasserversorgungseinheit (10), die einen entnehmbaren Wassertank (20) mit einer Ventileinheit (50) zur Kopplung mit der Verdampfereinheit aufweist, wobei die Ventileinheit (50) zwei voneinander separat ausgebildete Ventile (52, 54) aufweist, wobei in einem Betriebszustand des Dampfgargeräts eines der Ventile (52) zum Führen von Wasser und das andere der Ventile (54) zum Führen von Luft eingerichtet ist, und wobei die Wasserversorgungseinheit (10) eine Aufnahmeeinheit (60) zur Aufnahme des Wassertanks (20) aufweist, **dadurch gekennzeichnet, dass** die Aufnahmeeinheit (60) an einem Blendenträger (2) des Dampfgargeräts rückseitig angebracht ist und eine im Wesentlichen längliche Bauform aufweist.

2. Dampfgargerät nach Anspruch 1, **dadurch gekennzeichnet, dass** die Ventile (52, 54) in einer Einbaulage des Wassertanks (20) im Wesentlichen übereinander angeordnet sind.

3. Dampfgargerät nach einem der vorhergehenden Ansprüche, **dadurch gekennzeichnet, dass** die Aufnahmeeinheit (60) eine zylindrische, vorzugsweise kreiszylindrische Bauform aufweist.

4. Dampfgargerät nach einem der vorhergehenden Ansprüche, **dadurch gekennzeichnet, dass** die Aufnahmeeinheit (10) ein Adapterteil (70) mit zwei ersten Anschlussmitteln (72a, 72b) zum fluidtechnischen Koppeln mit dem Wassertank (20) in einer Betriebsstellung einerseits und mit zwei zweiten Anschlussmitteln (74a, 74b) zum fluidtechnischen Koppeln mit der Verdampfereinheit andererseits aufweist.

5. Dampfgargerät nach Anspruch 4, **dadurch gekennzeichnet, dass** das Adapterteil (70) zumindest einen Rasthaken (78) zum Verrasten des Wassertanks (20) mit dem Adapterteil (70) aufweist.

6. Dampfgargerät nach Anspruch 4 oder 5, **dadurch gekennzeichnet, dass** das Adapterteil (70) zwei voneinander separat ausgebildete Verbindungselemente (79a, 79b) aufweist, durch die jeweils ein erstes Anschlussmittel (72a, 72b) und ein zweites Anschlussmittel (74a, 74b) gebildet sind.

7. Dampfgargerät nach einem der Ansprüche 4 bis 6, **dadurch gekennzeichnet, dass** die ersten Anschlussmittel (72a, 72b) jeweils durch einen Dichtungsstutzen (72a', 72b') zum fluidtechnischen Koppeln mit den Ventilen (52, 54) gebildet sind.

8. Dampfgargerät nach Anspruch 7, **dadurch gekennzeichnet, dass** die Dichtungsstutzen (72a, 72b) im Wesentlichen in einer Betätigungsrichtung (BR) des Wassertanks (20) an dem Adapterteil (70) abgestützt sind.

9. Dampfgargerät nach Anspruch 7 oder 8, **dadurch gekennzeichnet, dass** die Dichtungsstutzen (72a, 72b) jeweils eine Dichtung (77a, 77b), vorzugsweise eine als O-Ring gebildete Gummidichtung aufweisen.

10. Dampfgargerät nach einem der Ansprüche 4 bis 9, **dadurch gekennzeichnet, dass** das Adapterteil (70) in einem in der Aufnahmeeinheit (60) gebildeten Lagerabschnitt (66) im Wesentlichen in einer Betätigungsrichtung (BR) des Wassertanks (20) verschiebbar gelagert ist.

11. Dampfgargerät nach einem der Ansprüche 5 bis 10, **dadurch gekennzeichnet, dass** das Adapterteil (70) eine Kulisse (75) aufweist und durch eine Feder (76) im Wesentlichen in einer Betätigungsrichtung (BR) federkraftbeaufschlagt ist, wobei in die Kulisse (75) ein Kulissenstein (82) eingreift, der insbesondere in einer Halteklammer geführt ist.

12. Dampfgargerät nach der vorhergehenden Ansprüche, **dadurch gekennzeichnet, dass** der Wassertank (20) an der einem Benutzer zugewandten Vorderseite (VS) des Wassertanks ein Verschlusselement (30) aufweist, das vorzugsweise durch einen Bajonett- oder Schraubverschluss an einem Grundkörper (22) des Wassertanks (20) befestigbar ist.

13. Dampfgargerät nach Anspruch 12, **dadurch gekennzeichnet, dass** das Verschlusselement (30) eine Abdeckkappe (34) aufweist, die in Einbaulage zumindest abschnittsweise eine einem Benutzer zugewandte Vorderseite (VS) des Wassertanks (20) bildet.

14. Dampfgargerät nach einem der vorhergehenden Ansprüche, **dadurch gekennzeichnet, dass** der Wassertank (20) mittels einer Push-Push-Einheit (90) aus dem Dampfgargerät entnehmbar ist.

## Claims

1. Steam cooking appliance comprising an evaporator unit using which water can be evaporated and the steam produced by the evaporator unit can be supplied into the cooking chamber of the steam cooking appliance, and a water supply unit (10) which has a removable water tank (20) comprising a valve unit (50) for coupling to the evaporator unit, wherein the valve unit (50) has two valves (52, 54) formed separately from one another, wherein in one operating state of the steam cooking appliance, one of the valves (52) is designed for guiding water and the other of the valves (54) for guiding air, and wherein the water supply unit (10) has a receiving unit (60) for receiving the water tank (20), **characterised in that** the receiving unit (60) is attached to the rear side of a panel support (2) of the steam cooking appliance and has an essentially elongated design.

2. Steam cooking appliance according to claim 1, **characterised in that** the valves (52, 54) are essentially arranged one above the other in an installed position of the water tank (20).

3. Steam cooking appliance according to one of the preceding claims, **characterised in that** the receiving unit (60) has a cylindrical, preferably circular-cylindrical design.

4. Steam cooking appliance according to one of the preceding claims, **characterised in that** the receiving unit (10) has an adapter part (70) having two first connection means (72a, 72b) for fluidically coupling to the water tank (20) in an operating position on the one hand and two second connection means (74a, 74b) for fluidically coupling to the evaporator unit on the other hand.

5. Steam cooking appliance according to claim 4, **characterised in that** the adapter part (70) has at least one latching hook (78) for latching the water tank (20) to the adapter part (70).

6. Steam cooking appliance according to claim 4 or 5, **characterised in that** the adapter part (70) has two connecting elements (79a, 79b) which are formed separately from one another and through which a first connection means (72a, 72b) and a second connection means (74a, 74b) are formed in each case.

7. Steam cooking appliance according to one of claims 4 to 6, **characterised in that** the first connection means (72a, 72b) are formed in each case by a sealing connection piece (72a', 72b') for fluidically coupling to the valves (52, 54).

8. Steam cooking appliance according to claim 7, **characterised in that** the sealing connection pieces (72a, 72b) are essentially supported on the adapter part (70) in an actuating direction (BR) of the water tank (20).

9. Steam cooking appliance according to claim 7 or 8, **characterised in that** the sealing connection pieces (72a, 72b) each have a seal (77a, 77b), preferably formed as an O-ring rubber seal.

10. Steam cooking appliance according to one of claims 4 to 9, **characterised in that** the adapter part (70) is mounted in a bearing section (66) formed in the receiving unit (60) such that it can be displaced essentially in an actuating direction (BR) of the water tank (20).

11. Steam cooking appliance according to one of claims 5 to 10, **characterised in that** the adapter part (70) has a slotted guide (75) and is acted upon by a spring (76) essentially in an actuating direction (BR) in a spring-loaded manner, wherein a sliding block (82) engages in the slotted guide (75), which sliding block is guided in particular in a retaining clip.

12. Steam cooking appliance according to the preceding claims, **characterised in that** the water tank (20) has a closure element (30) on the front side (VS) of the water tank facing a user which can preferably be fastened to a main body (22) of the water tank (20) by means of a bayonet or screw closure.

13. Steam cooking appliance according to claim 12, **characterised in that** the closure element (30) has a cover cap (34) which in installed position, at least in sections, forms a front side (VS) of the water tank (20) facing a user.

14. Steam cooking appliance according to one of the preceding claims, **characterised in that** the water tank (20) can be removed from the steam cooking appliance by means of a push-push unit (90).

## Revendications

1. Appareil de cuisson à la vapeur comprenant une unité d'évaporation, au moyen duquel de l'eau peut être évaporée et la vapeur produite par l'unité d'évaporation peut être distribuée dans l'enceinte de cuisson de l'appareil de cuisson à la vapeur, et une unité d'alimentation d'eau (10), qui comprend un réservoir d'eau (20) amovible comportant un ensemble de soupape (50) pour le coupler à l'unité d'évaporation, dans lequel l'ensemble de soupape (50) comprend deux soupapes (52, 54) formées séparément l'une de l'autre,
dans lequel, dans un état de fonctionnement de l'appareil de cuisson à la vapeur, l'une des soupapes (52) est configurée pour guider de l'eau et l'autre soupape (54) est configurée pour guider de l'air, et
dans lequel l'unité d'alimentation d'eau (10) comprend une structure de logement (60) pour loger le réservoir d'eau (20),
**caractérisé en ce que** la structure de logement (60) est disposée à l'arrière sur un support de panneau (2) de l'appareil de cuisson à la vapeur et a une forme essentiellement oblongue.

2. Appareil de cuisson à la vapeur selon la revendication 1, **caractérisé en ce que** les soupapes (52, 54) sont disposées essentiellement l'une au-dessus de l'autre dans une position de montage du réservoir d'eau (20).

3. Appareil de cuisson à la vapeur selon l'une des revendications précédentes, **caractérisé en ce que** la structure de logement (60) a une forme cylindrique, de préférence cylindrique circulaire.

4. Appareil de cuisson à la vapeur selon l'une des revendications précédentes, **caractérisé en ce que** la structure de logement (10) comprend une partie d'adaptateur (70) comportant deux premiers moyens de raccordement (72a, 72b) pour un couplage fluidique avec le réservoir d'eau (20) dans une position de service d'un côté et deux deuxièmes moyens de raccordement (74a, 74b) pour un couplage fluidique avec l'unité d'évaporation d'un autre côté.

5. Appareil de cuisson à la vapeur selon la revendication 4, **caractérisé en ce que** la partie d'adaptateur (70) comprend au moins un crochet d'encliquetage (78) pour encliqueter le réservoir d'eau (20) sur la partie d'adaptateur (70).

6. Appareil de cuisson à la vapeur selon la revendication 4 ou 5, **caractérisé en ce que** la partie d'adaptateur (70) comprend deux éléments d'assemblage (79a, 79b) formés séparément l'un de l'autre, par lesquels un premier moyen de raccordement (72a, 72b) et un deuxième moyen de raccordement (74a, 74b) sont respectivement formés.

7. Appareil de cuisson à la vapeur selon l'une des revendications 4 à 6, **caractérisé en ce que** les premiers moyens de raccordement (72a, 72b) sont formés respectivement par une tubulure d'étanchéité (72a', 72b') pour un couplage fluidique avec les soupapes (52, 54).

8. Appareil de cuisson à la vapeur selon la revendication 7, **caractérisé en ce que** les tubulures d'étanchéité (72a, 72b) sont supportées contre la partie d'adaptateur (70) essentiellement dans une direction de manoeuvre (BR) du réservoir d'eau (20).

9. Appareil de cuisson à la vapeur selon la revendication 7 ou 8, **caractérisé en ce que** les tubulures d'étanchéité (72a, 72b) comprennent respectivement un joint d'étanchéité (77a, 77b), de préférence un joint d'étanchéité en caoutchouc constitué sous forme d'un joint torique.

10. Appareil de cuisson à la vapeur selon l'une des revendications 4 à 9, **caractérisé en ce que** la partie d'adaptateur (70) est montée de façon coulissante, essentiellement dans une direction de manoeuvre (BR) du réservoir d'eau (20), dans une section de palier (66) formée dans la structure de logement (60).

11. Appareil de cuisson à la vapeur selon l'une des revendications 5 à 10, **caractérisé en ce que** la partie d'adaptateur (70) comprend une coulisse (75) et est sollicitée par une force de ressort par un ressort (76) essentiellement dans une direction de manoeuvre (BR), dans lequel un coulisseau (82) s'engrène dans la coulisse (75), qui est guidé en particulier dans un étrier de retenue.

12. Appareil de cuisson à la vapeur selon l'une des revendications précédentes, **caractérisé en ce que** le réservoir d'eau (20) comprend sur le côté avant (VS) du réservoir d'eau (20) orienté vers un utilisateur un élément d'obturation (30), qui peut être fixé de préférence par une fermeture à baïonnette ou à vis à un corps de base (22) du réservoir d'eau (20).

13. Appareil de cuisson à la vapeur selon la revendication 12, **caractérisé en ce que** l'élément d'obturation (30) comprend un capuchon de recouvrement (34), qui forme, dans une position de montage, au moins par sections un côté avant (VS) du réservoir d'eau (20) orienté vers un utilisateur.

14. Appareil de cuisson à la vapeur selon l'une des revendications précédentes, **caractérisé en ce que** le réservoir d'eau (20) peut être démonté de l'appareil de cuisson à la vapeur au moyen d'un dispositif de type push-push (90).
